Europäisches Patentamt

(19) European Patent Office

Office européen des brevets

(11) Veröffentlichungsnummer: **0 111 212 B1**

(12) **EUROPÄISCHE PATENTSCHRIFT**

(45) Veröffentlichungstag der Patentschrift:
14.01.87

(51) Int. Cl.⁴: **B 60 B 17/00,** B 60 B 3/12

(21) Anmeldenummer: 83111702.3

(22) Anmeldetag: 23.11.83

(54) Schienenrad in Leichtbauweise.

(30) Priorität: 07.12.82 DE 3245257

(43) Veröffentlichungstag der Anmeldung:
20.06.84 Patentblatt 84/25

(45) Bekanntmachung des Hinweises auf die Patenterteilung:
14.01.87 Patentblatt 87/3

(84) Benannte Vertragsstaaten:
AT CH DE FR LI NL SE

(56) Entgegenhaltungen:
CH-A-147 312
CH-A-172 925
CH-A-181 146
DE-A-2 708 411
US-A-1 451 354

(73) Patentinhaber: Schmiedewerke Krupp- Klöckner
GmbH, Alleestrasse 70, D-4630 Bochum 1 (DE)

(72) Erfinder: Oehler, Hans H., Dipl.- Ing., Pappelweg
9, D-4630 Bochum (DE)
Erfinder: Krause, Gerd, Ing. grad.,
Bärendorferstrasse 1, D-4630 Bochum (DE)
Erfinder: Schneider, Jürgen, Dr. Ing. Dipl.- Ing.,
Am Gartenkamp 31, D-4630 Bochum (DE)
Erfinder: Kasper, Willi, Camillo- Sitte- Weg 13,
D-4630 Bochum (DE)
Erfinder: Murawa, Franz, Kaiserstrasse 63, D-4690
Herne (DE)

(74) Vertreter: Patentanwaltsbüro Cohausz & Florack,
Schumannstrasse 97, D-4000 Düsseldorf 1 (DE)

## Beschreibung

Die Erfindung bezieht sich auf ein als Vollrad bzw. wiederbereifbares Vollrad ausgebildetes Schienenrad in Leichtbauweise, bei dem Radnabe, Radscheibe und Radkranz einstückig aus Metall gepreßt sind, die in radialer Richtung ungewellte Radscheibe in tangentialer Richtung eine sich aus radial verlaufenden Wellenbergen und Wellentälern zusammensetzende Wellung aufweist, deren Höhe vom Radkranz zur Radnabe zunimmt und größer als die Radscheibendicke ist, und bei dem die Radscheibe mit großen Übergangsradien im Radkranz und in der Radnabe ausläuft.

Bei einem bekannten Schienenrad dieser Art wird die Forderung nach leichtem Gewicht vor allem durch die Auswahl des Materials, nämlich Aluminium, erreicht. Die Mittenebene dei gepreßten Radscheibe ist konisch, so daß deren Mantellinie geneigt zur Radachse liegt. Die Höhe der Wellung ist sehr groß und beträgt am Radkranz etwa 1/3 der Radkranzbreite. Trotz des geringen Gewichtes haben sich solche Schienenräder aus Aluminium in der Praxis nicht durchsetzen können. Dafür gibt es eine Reihe von Gründen, vor allem aber die geringe Dauerfestigkeit von Aluminium gegenüber Stahl. Weiter ist von Nachteil, daß solche Aluminiumräder nicht als Vollräder ausgeführt werden können, sondern regelmäßig bereift sein müssen. Der Radreifen besteht dann aus Stahl, der einen anderen Wärmeausdehnungskoeffizienten als Aluminium hat. Da ein klotzgebremstes Rad sich bei Dauerbremsungen stark erwärmt, muß dafür Sorge getroffen sein, daß trotz starker Temperaturschwankungen ein ausreichend fester Sitz des Radreifens gewährleistet ist (E. Kreissig; A. Szymanski. "Aluminiumradscheiben und ihre Wirkung, Zeitschrift Aluminium im Verkehr", 1953, die dem Oberbegriff des Anspruchs 1 entspricht).

Wegen dieser Nachteile werden in der Praxis für den Personen- und Güterverkehr auf der Schiene ausschließlich Stahlräder eingesetzt. Bei einem bekannten, aus Stahl gepreßten, bereiften Schienenrad mit tangential gewellter Radscheibe ist die Höhe der Wellung über den gesamten Radius konstant und etwa halb so groß wie die Breite der Radfelge. Auf ein Vollrad übertragen würde die Höhe der Wellung etwa 1/3 der Breite des Radkranzes betragen.

Ein solches Vollrad bzw. wiederbereifbares Vollrad läßt sich wegen der sehr großen Höhe der Wellung der Radscheibe in der Nähe des Radkranzes und wegen der hier vorhandenen großen Materialmenge nicht betriebsfest herstellen, weil es dabei infolge des hohen Verformungsgrades auf der Kümpelpresse zu Materialeinschnürungen an der Radscheibe und im Übergang von der Radscheibe zum Radkranz kommt. Abgesehen davon, daß ein solches Rad in der Regel nur aus einem Sonderstahl mit Federeigenschaften hergestellt werden kann, erfordert es eine zweihitzige Fertigung. Nach einer ersten Erwärmung für einen Preß- und Walzvorgang und anschließender mechanischer Bearbeitung muß nach einer zweiten Erwärmung auf einer Kümpelpresse die radiale und tangentiale Wellung der Radscheibe gekümpelt werden, um die endgültige Form zu erhalten.

Ferner ist ein Schienenrad in Leichtbauweise mit einem Schienenradkörper und einem auf die Radfelge unter Zwischenschaltung einer unter Vorspannung stehenden Gummieinlage aufgespannten Radreifen bekannt, bei dem die Radscheibe in radialer Richtung undevellt und in tangentialer Richtung eine sich aus Wellenbergen und Wellentälern zusammensetzende Wellung aufweist. Die zwischengeschaltete, unter Vorspannung stehende Gummieinlage hat den Zweck, den Radreifen sicher mit der Felge zu verbinden, ohne daß der Radkörper von einer hohen Vorspannung des Radreifens, die bei aufgeschrumpften Rädern für einen sicheren Sitz notwendig ist, belastet wird.

Bei diesem bekannten Rad ist die Höhe der Wellung im felgennahen Bereich schon vermindert gegenüber dem anderen bekannten Rad. Die flachekonische Grundform (Sturz) der Radscheibe bringt zwar den Vorteil mit sich, daß in einer axialen Richtung das Rad steifer wird, doch ist damit auch der Nachteil verbunden, daß dadurch die Aussteifung des Rades in entgegengesetzter axialer und in radialer Richtung vermindert ist. Deshalb ist diese Ausführung für ein gummigefedertes Rad ausgelegt, bei dem die Rad- und Seitenkräfte durch die Gummieinlage elastisch abgefedert werden.

Der Erfindung liegt die Aufgabe zugrunde, ein als Vollrad oder wiederbereifbares Vollrad ausgebildetes Schienenrad in Leichtbauweise zu schaffen, das sich leicht herstellen läßt und eine ausreichend hohe radiale und axiale Steifigkeit hat, und insbesondere nicht die anderen, aufgezeigten Nachteile der Aluminium- und Stahlräder (geringe Dauerfestigkeit, Sonderstahl) hat.

Diese Aufgabe wird erfindungsgemäß bei einem Schienenrad der eingangs genannten Art dadurch gelöst, daß bei einem aus Stahl bestehenden Vollrad zugunsten einer möglichst kleinen Wanddicke der Radscheibe die Höhe der Wellung der Radscheibe am Radkranz 1/10 bis 1/6 der Radkranzbreite beträgt und die Zunahme der Höhe der Wellung mindestens 2:1 beträgt und daß die Mittenebene der gewellten Radscheibe senkrecht zur Radachse liegt.

Bei dem erfindungsgemäßen Rad werden die materialbedingten Nachteile eines Aluminiumrades, wie z.B. geringe Dauerfestigkeit, durch das andere Material, nämlich Stahl, beseitigt. Das höhere Gewicht von Stahl wird durch einen geringeren Materialeinsatz kompensiert, der sich aus der flacheren Wellung und der kleineren Wanddicke ergibt. Da. die Mittenebene der Radscheibe senkrecht zur Radachse liegt und die Wellung von dem Radkranz zur Radnabe zunimmt, hat das Rad trotz der verhältnismäßig kleinen Wanddicke und der flachen Wellung die geforderte hohe axiale und radiale Steifigkeit. Dabei wird durch die unterschiedlich hohe Wellung die unterschiedliche Beanspruchung der Radscheibe berücksichtigt. So versteift die höhere Wellung der Radscheibe im nabennahen Bereich das Rad in einem ausreichenden Maße, um die hier wegen des im Vergleich zum Radkranz kleineren Umfanges auftretenden größeren Momente aufnehmen zu können. Darüber hinaus ergibt sich aufgrund der hohen Wellung in Verbindung mit der sturzfreien Radscheibe eine Abstützung für die Radnabe, so daß ihre Wandstärke im Vergleich zur Radnabe bei anderen bekannten Scheibenrädern kleiner sein kann, ohne daß das auf Kosten eines festen Schrumpf- bzw. Preßsitzes geht. Nicht zuletzt werden aufgrund der besonderen Formgebung die beim Stand der Technik aufgezeigten technologischen Schwierigkeiten bei der Herstellung des Rades überwunden. Das Material kann in gewünschtem Umfange fließen. Deshalb läßt sich das erfindungsgemäße Rad auch in einer Hitze durch Walzen, Pressen und Kümpeln herstellen.

Weitere vorteilhafte Ausgestaltungen der Erfindung sind in Unteransprüchen gekennzeichnet.

Im folgenden wird die Erfindung anhand einer ein Ausführungsbeispiel darstellenden Zeichnung näher erläutert. Im einzelnen zeigen

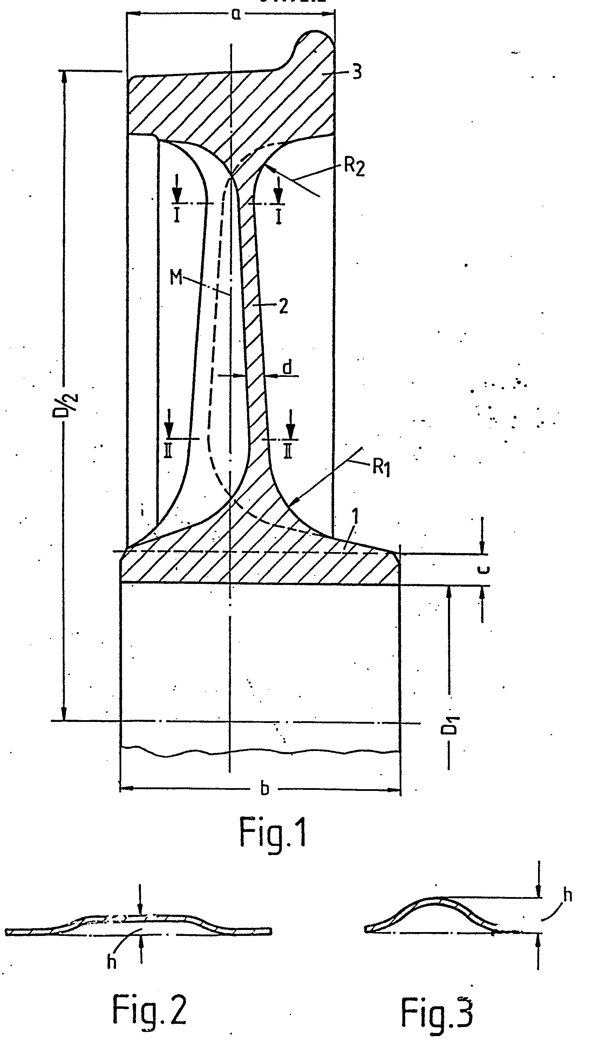

Fig. 1 ein als Vollrad ausgebildetes Schienenrad im halben Axialschnitt,

Fig. 2 einen Querschnitt des Schienenrades im Bereich der Radscheibe nach der Linie I-I der Fig. 1 und

Fig. 3 einen Querschnitt des Schienenrades im Bereich der Radscheibe nach der Linie II-II der Fig. 1.

Das als Vollrad ausgebildete Schienenrad besteht aus Radnabe 1, Radscheibe 2 und Radkranz 3. Die Radscheibe 2 geht über Übergangsradien $R_1$, $R_2$ in die Radnabe 1 und den Radkranz 3 über. Die Radscheibe 2 ist tangential gewellt. Die sich aus radial verlaufenden Wellenbergen und Wellentälern zusammensetzende Wellung ist im nabennahen Bereich (Schnitt II-II) größer als im nabenfernen Bereich (I-I). Da die Wellenberge und Wellentäler radial durchlaufen, ist ihre Breite im nabenfernen Bereich größer als im nabennahen Bereich. Im nabenfernen Bereich haben sie eine Trapezform, die im nabennahen Bereich in eine Sinusform übergeht. Die Höhe h der Wellun (Abstand der Kuppen der beidseits der Mittelebene M der Radscheibe 2 liegenden Wellenberge) im nabenfernen Bereich beträgt max. 1/6 der Radkranzbreite a. Die Höhe der Wellung nimmt in Richtung der Radnabe 1 um mindestens 2:1 zu. Die Höhe der Wellung am Radkranz 3 sollte jedoch nicht kleiner als 1/10 der Radkranzbreite a sein. Die Mittenebene M der Radscheibe 2 liegt senkrecht zur Radachse. Neben den bereits genannten Größenverhältnissen haben sich folgende, weitere Größenverhältnisse als günstig erwiesen:

Die Dicke d der Radscheibe 2 unmittelbar vor dem Übergangsbereich in den Radkranz 3 sollte ca. 1/8 des Laufkranzdurchmessers D betragen. Vorzugsweise sollte sie vom Radkranz 3 zur Radnabe 1 im Verhältnis von 1: 1,4 bis 1: 1,6 zunehmen. Bevorzugte Dicken in Radkranznähe sind 9 bis 12 mm und in Nabennähe 13 bis 18 mm. Die Übergangsradien $R_1$ von der Radscheibe 2 zur Radnabe 1 sollten das ca. 1,5-fache der Übergangsradien $R_2$ von der Radscheibe 2 zum Radkranz 3 und die Übergangsradien $R_2$ 1/15 bis 1/20 des Laufkranzdurchmessers D betragen. Die Breite b der Radnabe sollte das 3,5 bis 5-fache der Höhe h der Wellung im nabennahen Bereich der Radscheibe 2 betragen, wobei die Wandstärke c an den Enden der Radnabe 1 das 0,4 bis 0,6-fache der Höhe h der Wellung im nabennahen Bereich beträgt. Schließlich sollte der Radsatzdurchmesser D1 das 0,85 bis 1,2-fache der Breite b der Radnabe 1 betragen.

## Patentansprüche

1. Als Vollrad bzw. wiederbereifbares Vollrad ausgebildetes Schienenrad in Leichtbauweise, bei dem Radnabe (1), Radscheibe (2) und Radkranz (3) einstückig aus Metall gepreßt sind, die in radialer Richtung ungewellte Radscheibe in tangentialer Richtung eine sich aus radial verlaufenden Wellenbergen und Wellentälern zusammensetzende Wellung aufweist, deren Höhe (h) vom Radkranz zur Radnabe zunimmt und größer als die Radscheibendicke (d) ist, und bei dem die Radscheibe mit großen Übergangsradien im Radkranz und in der Radnabe ($R_2$ bzw. $R_1$) ausläuft, dadurch gekennzeichnet, daß bei einem aus Stahl bestehenden Vollrad zugunsten einer möglichst kleinen Wanddicke (d) der Radscheibe (2) die Höhe (h) der Wellung der Radscheibe (2) am Radkranz 1/10 bis 1/6 der Radkranzbreite (a) beträgt und die Zunahme der Höhe der Wellung mindestens 2: 1 beträgt und daß die Mittenebene (M) der gewellten Radscheibe (2) senkrecht zur Radachse liegt.

2. Schienenrad nach Anspruch 1, dadurch gekennzeichnet, daß die Dicke (d) der Radscheibe (2) vom Radkranz (3) zur Radnabe (1) im Verhältnis 1: 1,4 bis 1: 1,6 zunimmt.

3. Schienenrad nach Anspruch 1, dadurch gekennzeichnet, daß die Dicke (d) der Radscheibe (2) unmittelbar vor dem Übergangsbereich in den Radkranz (3) ca. 1/80 des Laufkranzdurchmessers (D) beträgt.

4. Schienenrad nach Anspruch 2 oder Anspruch 2 und 3 dadurch gekennzeichnet, daß die Wanddicke (d) der Radscheibe (2) in der Nähe des Radkranzes (3) 9 bis 12 mm und in der Nähe der Nabe (1) 13 bis 18 mm beträgt.

5. Schienenrad nach einem der Ansprüche 1 bis 4, dadurch gekennzeichnet, daß die Übergangsradien (R₂) von der Radscheibe (2) zum Radkranz (3) 1/15 bis 1/20 des Laufkranzdurchmessers (D) betragen.

6. Schienenrad nach einem der Ansprüche 1 bis 5, dadurch gekennzeichnet, daß die Übergangsradien (R₁) von der Radscheibe (2) zur Radnabe (1) das ca. 1,5-fache der Übergangsradien (R₂) von der Radscheibe (2) zum Radkranz (3) betragen.

7. Schienenrad nach einem der Ansprüche 1 bis 6, dadurch gekennzeichnet, daß die Breite (b) der Radnabe (1) das 3,5 bis 5-fache der Höhe (h) der Wellung im nabennahen Bereich der Radscheibe (2) beträgt.

8. Schienenrad nach einem der Ansprüche 1 bis 7, dadurch gekennzeichnet, daß die Wandstärke (c) an den Enden der Radnabe (1) das 0,4 bis 0,6-fache der Höhe (h) der Wellung im nabennahen Bereich beträgt.

9. Schienenrad nach einem der Ansprüche 1 bis 8, dadurch gekennzeichnet, daß der Radsitzdurchmesser (D₁) das 0,85 bis 1,2-fache der Breite (b) der Radnabe (1) beträgt.

## Claims

1. Light-construction rail wheel designed as solid wheel or rerimable solid wheel the wheel hub (1), wheel disk (2) and wheel rim (3) of which are pressed in one piece from a metal blank, wherein the radially uncorrugated wheel disk is provided in tangential direction with corrugations consisting of wave peaks and wave troughs, the height (h) of which increases from the wheel rim towards the wheel hub and is greater than the wheel disk thickness (d), and in which the wheel disk ends by large transitory radii into the wheel hub (R2 or R1), characterized in that in a solid wheel made of steel for smallest possible wall thickness (d) of wheel disk (2) height (h) of the wheel disk (2) corrugation amounts adjacent to wheel rim (3) to 1/10th to 1/6th of wheel rim width (a) while the increase of corrugation height amounts to at least 2:1, and that central plane (M) of corrugated wheel disk (2) vertically extends with respect to the wheel axle.

2. Rail wheel as defined by claim 1, characterized in that thickness (d) of wheel disk (2) increases from wheel rim (3) towards wheel hub (1) in a ratio of about 1:1.4 to 1:1.6.

3. Rail wheel as defined by claim 1, characterized in that directly in front of the transition area into wheel rim (3) thickness (d) of wheel disk (2) amounts to about 1/80 of tread diameter (D).

4. Rail wheel as defined by claim 2 or by claims 2 and 3, characterized in that adjacent to wheel rim (3) thickness (d) of wheel disk (2) amounts to about 9 to 12 mm and adjacent hub (1) to about 13 to 18 mm.

5. Rail wheel as defined by either of claims 1 to 4, characterized in that transition radii (R2) between wheel disk (2) and wheel rim (3) amount to about 1/15th to about 1/20th of the value of tread diameter (D).

6. Rail wheel as defined by either of claims 1 to 5, characterized in that transition radii (R1) between wheel disk (2) and wheel hub (1) amount to about 1.5 times the value of transition radii (R2) between wheel disk (2) and wheel rim (3).

7. Rail wheel as defined by either of claims 1 to 6, characterized in that width (b) of wheel hub (1) amounts to 3.5 to 5 times the value of corrugation height (h) in the hub-adjacent area of wheel disk (2).

8. Wheel disk as defined by either of claims 1 to 7, characterized in that wall thickness (c) at the ends of wheel hub (1) amounts to about 0.4 to 0.6 times the value of corrugation height (h) in the hub-adjacent area.

9. Rail wheel as defined by either of claims 1 to 8, characterized in that wheel seat diameter (DI) amounts to about 0.85 to 1.2 the value of width (b) of wheel hub (1).

## Revendications

1.- Roue pour rail ayant la forme d'une roue pleine ou d'une roue pleine pouvant être rebandagée, de construction légère, dans laquelle le moyeu (1) de roue, le disque (2) de roue et la jante (3) de roue sont moulés en une seule pièce, le disque de roue non ondulé en direction radiale présente en direction tangentielle un état ondulé formé par l'ensemble de sommets et de creux s'étendant radialement, dont la hauteur (h) augmente de la jante au moyeu de la roue et est supérieure à l'épaisseur (d) du disque de roue, et dans laquelle le disque se termine dans la jante et le moyeu de roue avec des grands rayons de passage (R₂ ou R₁), caractérisée par le fait que, pour une roue pleine en acier, pour obtenir une épaisseur de paroi (d) du disque (2) de roue la plus faible possible, la hauteur (h) de l'ondulation du disque (2) de roue à la jante (3) de roue est comprise entre 1/10 et 1/6 de la largeur (a) de la jante de roue et l'augmentation de hauteur de l'ondulation est au moins égale à 2:1, et que le plan médian (M) du disque (2) de roue ondulé est orthogonal à l'axe de roue.

2.- Roue pour rail selon la revendication 1, caractérisée par le fait que l'épaisseur (d) du disque (2) de roue augmente de la jante (3) de roue au moyeu (1) de roue dans un rapport de 1:1,4 à 1:1,6.

3.- Roue pour rail selon la revendication 1, caractérisée par le fait que l'épaisseur (d) du disque (2) de roue est égale à environ 1/80 du diamètre (D) du cercle de roulement immédiatement avant la zone de passage dans la jante (3) de roue.

4.- Roue pour rail selon la revendication 2 ou les revendications 2 et 3, caractérisée par le fait que l'épaisseur de paroi (d) du disque (2) de roue au voisinage de la jante (3) de roue est de 9 à 12 mm et, au voisinage du moyeu (1), de 13 à 18 mm.

5.- Roue pour rail selon l'une des revendicatons 1 à 4 caractérisée par le fait que les rayons de passage $(R_2)$ du disque (2) de roue à la jante (3) de roue sont compris entre 1/15 et 1/20 du diamètre (D) du cercle de roulement.

6.- Roue pour rail selon l'une des revendications 1 à 5, caractérisée par le fait que les rayons de passage $(R_1)$ du disque (2) de roue au moyeu (1) de roue sont égaux à environ 1,5 fois les rayons de passage $(R_2)$ du disque (2) de roue à la jante (3) de roue.

7.- Roue pour rail selon l'une des revendications 1 à 6, caractérisée par le fait que la largeur (b) du moyeu (1) de roue est comprise entre 3,5 et 5 fois la hauteur (h) de l'ondulation dans la zone du disque (2) de roue proche du moyeu.

8.- Roue pour rail selon l'une des revendications 1 à 7, caractérisée par le fait que l'épaisseur de paroi (c) aux extrémités du moyeu (1) de roue est comprise entre 0,4 et 0,6 fois la hauteur (h) de l'ondulation dans la zone proche du moyeu.

9.- Roue pour rail selon l'une des revendications 1 à 8, caractérisée par le fait que le diamètre du siège $(D_1)$ de la roue est compris entre 0,85 et 1,2 fois la largeur (b) du moyeu (1) de roue.

Fig.1

Fig.2

Fig.3